# EUROPÄISCHE PATENTSCHRIFT

(11) **EP 3 572 684 B1**
(45) Veröffentlichungstag und Bekanntmachung des Hinweises auf die Patenterteilung: **07.07.2021**
(21) Anmeldenummer: 19176180.8
(22) Anmeldetag: 23.05.2019
(51) Int. Cl.: F16D 3/56, F16D 1/10, F16D 3/06

(54) **ADDITIV GEFERTIGTE FLEXKUPPLUNG**
FLEX COUPLING PRODUCED USING ADDITIVE MANUFACTURING
ACCOUPLEMENT ÉLASTIQUE FABRIQUÉ DE MANIÈRE ADDITIVE

(30) Priorität: 24.05.2018 DE 102018112485
(43) Veröffentlichungstag der Anmeldung: 27.11.2019
(73) Patentinhaber: Liebherr-Aerospace Lindenberg GmbH, 88161 Lindenberg/Allgäu (DE)
(72) Erfinder: Hermann, Stefan, 88239 Wangen (DE); Berger, Lutz, 88161 Lindenberg (DE)
(74) Vertreter: Laufhütte, Dieter

(56) Entgegenhaltungen:
- EP-A2- 1 347 192
- DE-A1-102010 031 841
- US-A- 3 267 697

## Beschreibung

Die Erfindung betrifft eine additiv gefertigte Flexkupplung für den Drehwinkelgeber eines Reduziergetriebes und einen Drehwinkelgeber sowie ein Reduziergetriebe mit wenigstens einer entsprechenden Flexkupplung.

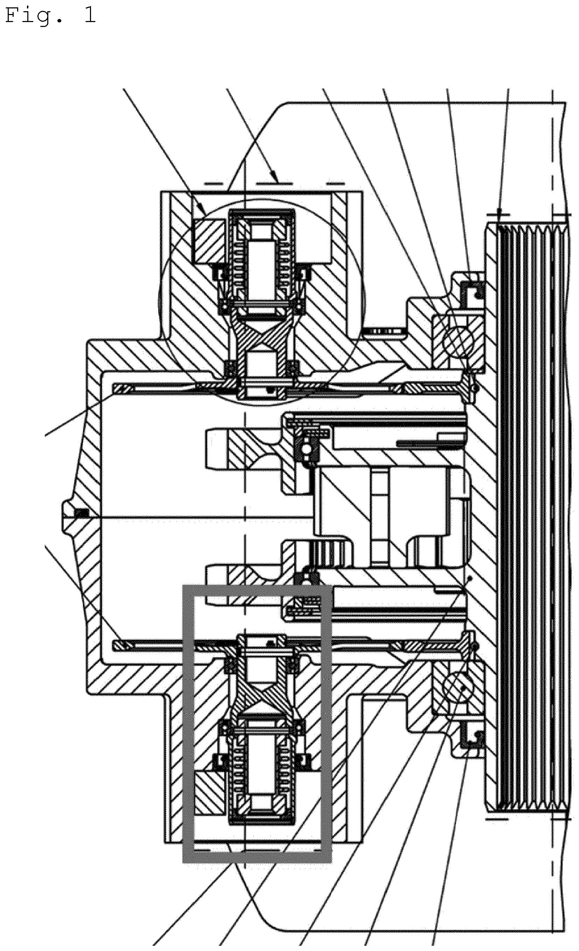

Flexkupplungen können, wie in Figur 1 gezeigt, Bestandteile von Drehwinkelgebern von Reduziergetrieben sein, wie sie insbesondere in dem Bereich der Luftfahrt genutzt werden. Die Flexkupplung stellt die Drehsignalübertragung zwischen dem Inneren des Getriebes und einem außenliegenden Sensor sicher. Ein Teil der Welle bzw. der Flexkupplung ist flexibel ausgeführt um den Einbau zu erleichtern und einen leichten Achsversatz der Sensorwelle auszugleichen.

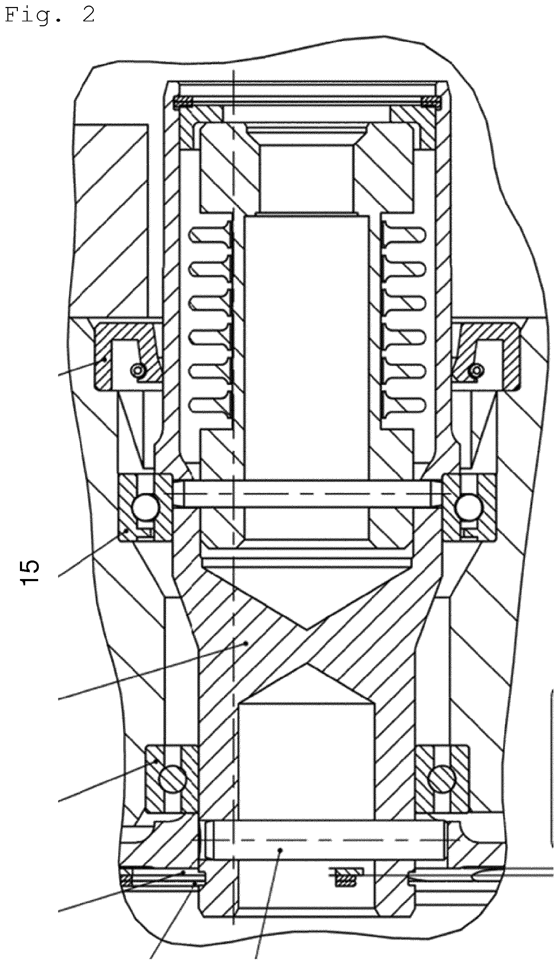

Figur 2 zeigt dabei eine aus dem Stand der Technik bekannte Baugruppe, welche die Flexkupplung bildet. Die Baugruppe umfasst eine äußere Hülse, die doppelt gelagert ist und an der eine Dichtung läuft bzw. anliegt. Innerhalb der Hülse ist eine Faltenbalgkupplung eingebaut, die an einem Ende eine Steckverzahnung aufweist und an einem anderen Ende zur Momentenübertragung verstiftet und verklebt wird.

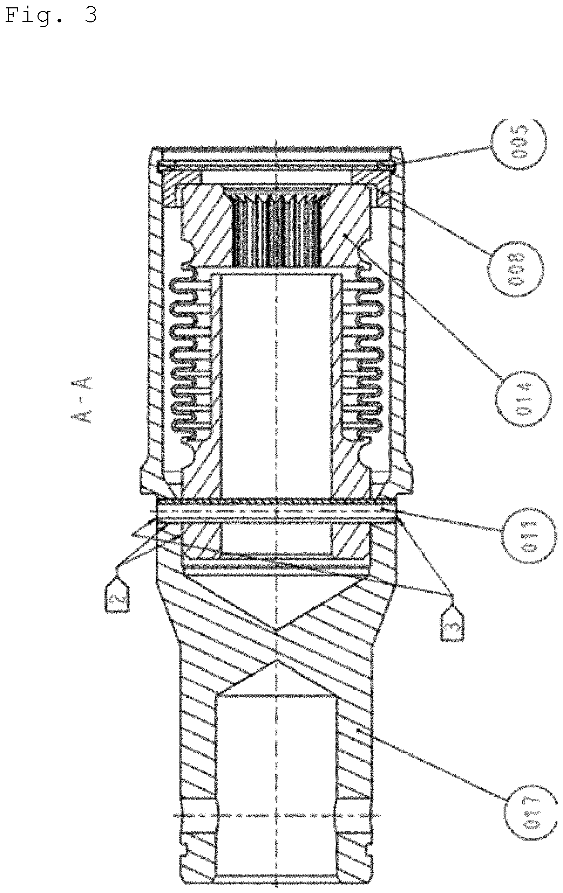

Wie Figur 3 zu entnehmen ist, bestehen die aus dem Stand der Technik bekannten Flexkupplungen aus ca. 7 Teilen, die geschweißt, verstiftet, geklebt und mit Spannring gesichert und montiert werden. Eines der Bauteile, die innenliegenden Faltenbalgkupplung, ist dabei zur Verbindung mit dem Sensor mit einer Steckverzahnung versehen. Ein Teil der Außenfläche der Hülse muss harteloxiert werden um den Verschleiß bei der Dichtung zu minimieren.

US 3 267 697 A, EP 1 347 192 A2, und DE 10 2010 031841 A1 zeigen aus dem Stand der Technik bekannte flexible Kupplungen.

Nachteilig an dem aus dem Stand der Technik bekannten Flexkupplungen ist, das deren Einzelteile zugekauft und/oder wenigstens teilweise aufwändig hergestellt und/oder montiert werden müssen. Durch die vielen Einzelteile, Herstellungsschritte und die entsprechend notwendige Lagerung und Montage ist diese Baugruppe teuer in der Herstellung.

Vor diesem Hintergrund ist es Aufgabe der Erfindung eine verbesserte Flexkupplung bereitzustellen, die insbesondere einfacher und deutlich günstiger herzustellen ist, als dies aus dem Stand der Technik bekannt ist.

Diese Aufgabe wird erfindungsgemäß durch eine Flexkupplung mit den Merkmalen des Anspruchs 1 gelöst. Vorteilhafte Ausgestaltungen sind Gegenstand der Unteransprüche.

Die erfindungsgemäße Flexkupplung ist dazu ausgebildet, in Zusammenhang mit einem Drehwinkelgeber eines Reduziergetriebes eingesetzt zu werden. Derartige Reduziergetriebe werden insbesondere in Luftfahrtanwendungen genutzt.

Die erfindungsgemäße Flexkupplung umfasst wenigstens eine Hülse, wenigstens eine an einem axialen Ende der Hülse angeordnete Steckverzahnung, wenigstens einen die Steckverzahnung umgebenden Ring und wenigstens eine innerhalb der Hülse verlaufende Versteifung. Die Hülse kann wenigstens abschnittsweise hohlzylinderförmig ausgebildet sein. Sie kann entsprechend wenigstens abschnittsweise rotationssymmetrische Elemente mit einer entsprechenden Längs- bzw. Rotationsachse umfassen. Der die Steckverzahnung umgebende Ring kann innerhalb der Hülse verortet sein. Der Ring kann sich unmittelbar an die Steckverzahnung anschließen. Die Steckverzahnung kann an der Innenseite des Rings ausgebildet sein. Dabei kann der Ring mit der Steckverzahnung unmittelbar verbunden sein oder von ihr getrennt sein bzw. nur mittelbar über die Hülse verbunden sein.

Die additiv gefertigte Flexkupplung kann die aus dem Stand der Technik bekannte Baugruppe mit ihren Einzelteilen ersetzen und dabei weiterhin die Drehmomentübertragung sicherstellen und torsionssteif und trotzdem biegeweich sein kann. Die erfindungsgemäße Flexkupplung umfasst die Steckverzahnung und kann in einer Aufspannung fertigzerspant werden. Die Herstellung der erfindungsgemäßen Flexkupplung ist dadurch deutlich vereinfacht und es können somit Herstellungs- und Montagekosten reduziert sowie der Lageraufwand verringert werden.

In einer bevorzugten Ausführung der Erfindung ist denkbar, dass die Versteifung wenigstens teilweise als Kuppel, Profilabschnitt, Helix, Doppelhelix und/oder Mehrfachhelix ausgebildet ist. Es ist somit auch denkbar, dass eine kombinierte Versteifung aus miteinander gekoppelten unterschiedlichen Geometrien vorgesehen ist.

In einer besonders bevorzugten Ausführung der Erfindung ist denkbar, dass eine als Helix, Doppelhelix und/oder Mehrfachhelix ausgebildete Versteifung einen Steigungswinkel größer als 35° aufweist. Von dieser Ausführungsform ist auch erfasst, dass die Versteifung lediglich teilweise als helixförmige Struktur und/oder als Struktur mit unterschiedlichen helixförmigen Abschnitten mit einem entsprechenden Steigungswinkel ausgebildet ist.

Eine helixförmige Struktur mit entsprechendem Steigungswinkel benötigt zu deren Herstellung keine Stützstrukturen und kann somit einfacher additiv gefertigt werden.

In einer weiteren bevorzugten Ausführung ist vorgesehen, dass die Steckverzahnung allein über die Versteifung mit der Hülse gekoppelt ist. In dieser Ausführung besteht zwischen der Steckverzahnung und/oder dem Ring keine radial nach außen zur Hülse bestehende Verbindung, sondern eine Verbindung zwischen der Steckverzahnung und der Hülse wird ausschließlich über die Versteifung und dabei insbesondere überwiegend in einer axialen Richtung hergestellt.

In einer alternativen bevorzugten Ausführung ist dagegen denkbar, dass die Steckverzahnung allein über wenigstens eine Rippe mit der Hülse gekoppelt ist. Diese Rippe verläuft im Unterschied zur Versteifung überwiegend von Innen nach Außen in radialer Richtung zwischen der Steckverzahnung bzw. dem Ring und der Hülse.

In dieser Ausführung ist die Versteifung der Flexkupplung identisch mit der wenigsten einen Rippe.

In einer weiteren bevorzugten Ausführung ist denkbar, dass die Steckverzahnung über die Versteifung und über wenigstens eine Rippe mit der Hülse gekoppelt ist. Wie bei den zuvor beschriebenen Ausführungsformen verläuft die Versteifung im Wesentlichen in axialer Richtung während die Rippe im Wesentlichen in radialer Richtung bezogen auf die Flexkupplung verläuft.

In weiteren bevorzugten Ausführungsform ist denkbar, dass die wenigstens eine Rippe in radialer Richtung der Flexkupplung und/oder spiralförmig verläuft. Beim radialen Verlauf der Rippe kann dieser streng gradlinig von der Längsachse der Hülse in radialer Richtung nach außen oder zusätzlich in Umfangsrichtung gekrümmt oder angewinkelt sein. Bei einem spiralförmigen Verlauf der Rippe kann diese überwiegend oder Großteils in Umfangsrichtung gekrümmt oder angewinkelt sein und zusätzlich von radial innen nach radial außen bezogen auf die Hülse bzw. bezogen auf die Flexkupplung verlaufen.

Die Erfindung ist ferner auf einen Drehwinkelgeber mit wenigstens einer Flexkupplung nach einem der Ansprüche 1 bis 8 und auf ein Reduziergetriebe mit wenigstens einem entsprechenden Drehwinkelgeber gerichtet. Weitere Einzelheiten und Vorteile der Erfindung sind anhand der in den Figuren beispielhaft gezeigten Ausführung erläutert. Dabei zeigen:
- Figur 1:: Schnittansicht aus einer aus dem Stand der Technik bekannten Flexkupplung in einem eingebauten Zustand;
- Figur 2:: Vergrößerte Ansicht der in Figur 1 gezeigten Flexkupplung;
- Figur 3:: Detailansicht der in Figur 2 gezeigten Flexkupplung;
- Figuren 4a, 4b:: Unterschiedliche Ansichten einer erfindungsgemäßen Flexkupplung;
- Figuren 5a, 5b:: Zwei Ansichten eines Ausführungsbeispiel einer erfindungsgemäßen Flexkupplung und;
- Figuren 6a, 6b:: Zwei Ansichten eines weiteren Ausführungsbeispiel einer erfindungsgemäßen Flexkupplung.

Figuren 1 bis 3 zeigen unterschiedliche Ansichten von aus dem Stand der Technik bekannten Flexwellen bzw. in Reduziergetrieben bzw. Drehwinkelgebern verbauten Flexkupplungen.

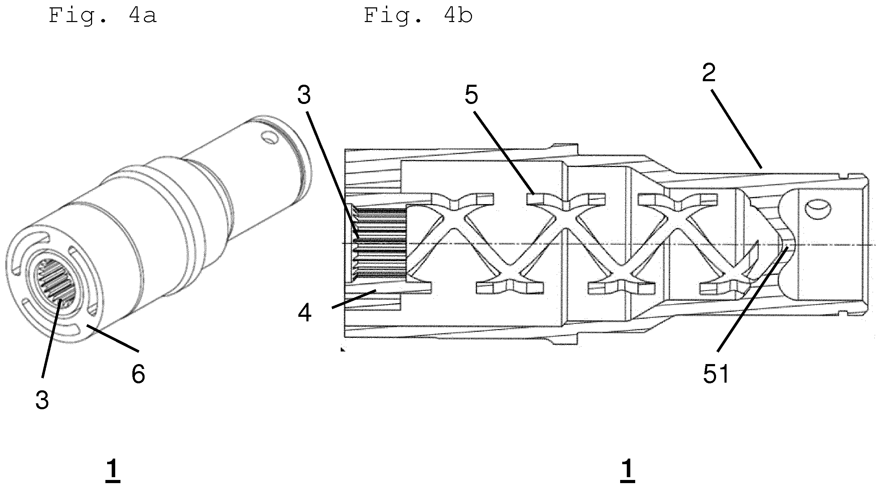

Die Figuren 4a und 4b zeigen eine perspektivische und eine Schnittansicht einer erfindungsgemäßen Flexkupplung 1 mit einer außenliegenden Hülse 2, einer an einem Axialende der Hülse 2 vorgesehenen Steckverzahnung 3, einen die Steckverzahnung umgebenden Ring 4 und einen innerhalb der Hülse 2 verlaufenden Versteifung 5.

Die Versteifung 5 des in Figur 4b gezeigten Ausführungsbeispiel ist als Doppelhelix ausgebildet. Die Kuppelstruktur 51, welche im Bereich eines Axialendes der Helixstruktur vorgesehen ist, kann ebenfalls als Teil der Versteifung 5 aufgefasst werden. Die Helixstruktur verläuft zwischen einem axialen Endbereich der Flexkupplung 1 und dem anderen axialen Endbereich der Flexkupplung 1. Die Längsachse ist dabei von links nach rechts verlaufen gezeigt. Im Ausführungsbeispiel der Figur 4b verbindet die Helixstruktur die Kuppel 51 mit der Steckverzahnung 3. Der Ring 4 kann weder radial noch axial mit der Steckverzahnung 3 verbunden sein. Vielmehr kann der Ring 4 nur mit dem Gehäuse 2 unmittelbar verbunden sein und damit einen radialen Anschlag darstellen, um zu große Auslenkungen der Steckverzahnung 3 zu verhindern.

Die Versteifung 5 kann allein als Kuppel, Profilabschnitt, Helix, Doppelhelix und/oder Mehrfachhelix ausgebildet sein oder als Kombination der genannten und/oder weiterer Strukturen ausgebildet sein.

Bei einer wenigstens teilweise helixförmig ausgebildeten Versteifung kann der Steigungswinkel der Helix oder der Helices größer als 35° sein, um die additive Fertigung der Helixstruktur zu erleichtern. Die Helix kann auch aus Abschnitten mit unterschiedlichen Steigungswinkeln aufgebaut sein.

Im Ausführungsbeispiel der Figuren 4a und 4b ist die Steckverzahnung über die Versteifung 5 und gegebenenfalls zusätzlich über die Rippen 6 mit der Hülse 3 gekoppelt. Die Rippen 6 verlaufen im Ausführungsbeispiel der Figur 4a streng radial von innen nach außen von der Steckverzahnung 3 bzw. vom Ring 4 zur Hülse 2. Es ist dabei auch denkbar, dass die Steckverzahnung 3 nicht unmittelbar mit dem Ring 4 gekoppelt ist.

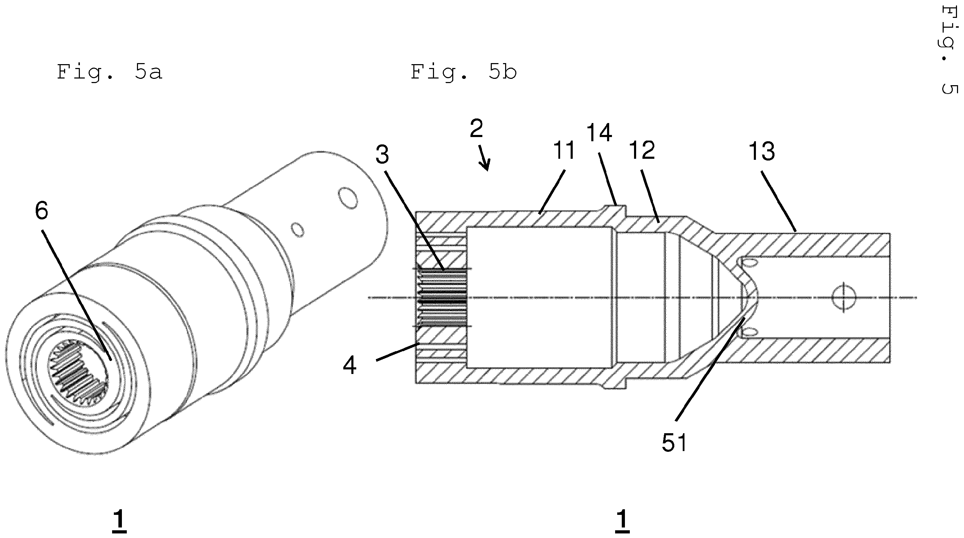

Figuren 5a und 5b zeigen eine Ausführung der Flexkupplung 1, bei der keine im Wesentlichen axial verlaufende Versteifung 5 vorgesehen ist. Die Versteifung ist allein durch eine Kuppelstruktur 51 und den Ring 4 gegeben. Der Ring 4 ist über spiralförmig angeordnete Rippen 6 mit der Hülse 2 verbunden. Hierbei kann der Ring 4 als die Versteifung 5 bzw. als Federelement 5 verstanden werden.

Im Ausführungsbeispiel der Figur 5a ist zu erkennen, dass die spiralförmig ausgebildeten Rippen 6 in Umfangsrichtung um etwa 180 Grad um die Achse der Flexkupplung 1 verlaufen. Hierbei können zwei oder mehr entsprechende Rippen 6 vorgesehen sein. Die Steckverzahnung 3 ist im Ausführungsbeispiel Figur 5a allein über die Rippen 6 mit der Hülse 2 gekoppelt. Denkbar ist auch, dass mehr oder weniger Rippen 6 zur Kopplung der Steckverzahnung 3 vorgesehen sind.

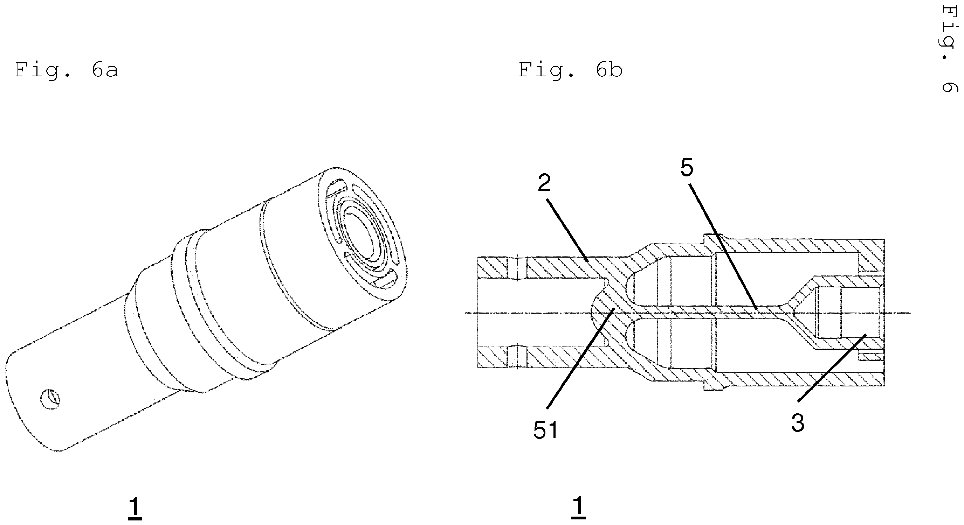

Im Ausführungsbeispiel der Figuren 6a und 6b verläuft die Versteifung 5 überwiegend als beispielsweise zylinderförmiges Profilelement von der Steckverzahnung 3 in axialer Richtung zum entgegengesetzten Ende bzw. Endbereich der Flexkupplung 1. Dort kann die Versteifung 5 über eine Kuppel 51 mit der Hülse 2 gekoppelt sein. Im Ausführungsbeispiel der Figuren 6a und 6b können die Rippen 6 entfallen, welche die Steckverzahnung 3 in radialer Richtung mit der Hülse 2 koppeln. Der Ring 4 kann analog zu den Figuren 4a, 4b als radialer Anschlag dienen.

In allen Ausführungsbeispielen kann die Flexkupplung 1 drei axial voneinander beabstandete Hohlzylinderabstände 11, 12, 13 mit jeweils unterschiedlichen Außen- und/oder Innenradien umfassen. Ein radial äußerster Abschnitt 14 der Flexkupplung 1 kann in allen Ausführungsformen als Axialanschlag für ein in Figur 2 gezeigtes Kugellager 15 ausgebildet sein. Wenigstens ein radial äußerer Teil der Flexkupplung 1 kann harteloxiert sein. Alle Komponenten der Flexkupplung sind einstückig miteinander additiv gefertigt.

In einem der Steckverzahnung 3 gegenüber liegenden Bereich der Flexkupplung 1 kann wenigstens eine in radialer Richtung in der Hülse 2 eingebrachte Durchführung vorgesehen sein, über welche die Flexkupplung 1 mit Komponenten des Drehwinkelgebers bzw. des Reduziergetriebes koppelbar ist. Insbesondere ist es denkbar zwei fluchtend miteinander ausgebildete Durchführungen vorzusehen, über welche die Flexkupplung mit weiteren Komponenten verbolzt bzw. gekoppelt werden kann.

Die Flexwelle kann als ein Teil additiv gefertigt werden und benötigt anschließend nur geringe Nacharbeit um die Funktionsflächen herzustellen. Dadurch sind die Herstellkosten und Durchlaufzeiten deutlich reduziert und die Lagerhaltungskosten der Einzelteile fallen weg. Durch den Einsatz der additiven Fertigung kann die Form und das Verhalten sehr einfach auf die spezifischen Anforderungen angepasst werden.

Die Erfindung ermöglicht es eine Struktur bereitzustellen, die torsionssteif und dabei biegeweich ist. Es wurde eine Struktur gefunden, die torsionssteif und biegeweich ist und dabei in die Hülse 2 integriert werden kann. Dies ist nur wirtschaftlich durch additive Fertigung möglich. Eine Mehrfachhelix erfüllt dabei diese Anforderung. Bei einem hinreichend großen Steigungswinkel (>35°) der Helix benötigt diese zu ihrer Herstellung keine Stützstrukturen für einen unproblematischen Aufbau.

Die Wandstärken sind dabei groß genug um innerhalb der festgelegten Mindestwandstärken zu fallen. Ein Ring 4 um die Verzahnung beschränkt die maximale Auslenkung der Helix um Beschädigung bei der Montage zu verhindern. Der Ring 4 kann mit der Verzahnung 3 über wenigstens eine Rippe verbunden sein oder auch nicht. Das Bauteil ist aufgrund der technologischen Reife in Titan aufgebaut, könnte jedoch auch aus anderen Metallen und sogar Kunststoffen gefertigt werden. Aufgrund der technologischen Reife wird die Kupplung momentan mittels selektivem Laserschmelzen hegestellt, könnte jedoch auch mit anderen, speziell günstigeren Verfahren, wie Siebdruck, Jetting, FDM, SLS, SLA oder ähnlichem hergestellt werden.

## Patentansprüche

1. Flexkupplung (1) für den Drehwinkelgeber eines Reduziergetriebes, umfassend wenigstens eine Hülse (2), wenigstens eine an einem axialen Ende der Hülse (2) angeordnete Steckverzahnung (3), wenigstens einen die Steckverzahnung (3) umgebenden Ring (4) und wenigstens eine innerhalb der Hülse (2) verlaufende Versteifung (5), wobei die Versteifung (5) wenigstens teilweise als Kuppel (51) ausgebildet ist und/oder wenigstens teilweise im Wesentlichen axial verläuft,
**dadurch gekennzeichnet,**
**dass** alle Komponenten der Flexkupplung (1) einstückig miteinander additiv gefertigt sind.

2. Flexkupplung (1) nach Anspruch 1, **dadurch gekennzeichnet, dass** die Versteifung (5) wenigstens teilweise als Kuppel (51), Profilabschnitt, Helix, Doppelhelix und/oder Mehrfachhelix ausgebildet ist.

3. Flexkupplung (1) nach Anspruch 2, **dadurch gekennzeichnet, dass** eine als Helix, Doppelhelix und/oder Mehrfachhelix ausgebildete Versteifung (5) einen Steigungswinkel größer als 35° aufweist.

4. Flexkupplung (1) nach einem der vorhergehenden Ansprüche, **dadurch gekennzeichnet, dass** die Steckverzahnung (3) allein über die Versteifung (5) mit der Hülse (2) gekoppelt ist.

5. Flexkupplung (1) nach einem der Ansprüche 1 bis 3, **dadurch gekennzeichnet, dass** die Steckverzahnung (3) allein über wenigstens eine Rippe (6) mit der Hülse (2) gekoppelt ist.

6. Flexkupplung (1) nach einem der Ansprüche 1 bis 3, **dadurch gekennzeichnet, dass** die Steckverzahnung (3) über die Versteifung (5) und über wenigstens eine Rippe (6) mit der Hülse (2) gekoppelt ist.

7. Flexkupplung (1) nach einem der Ansprüche 5 oder 6, **dadurch gekennzeichnet, dass** die wenigstens eine Rippe (6) in radialer Richtung der Flexkupplung (1) und/oder spiralförmig verläuft.

8. Flexkupplung (1) nach einem der vorhergehenden Ansprüche, **dadurch gekennzeichnet, dass** die Flexkupplung (1) drei axial voneinander beabstandete Hohlzylinderabschnitte (11, 12, 13) mit jeweils unterschiedlichen Außen- und/oder Innenradien umfasst, und/oder dass ein radial äußerster Abschnitt (14) der Flexkupplung (1) als Axialanschlag für ein Kugellager (15) ausgebildet ist und/oder dass wenigstens ein radial äußerer Teil der Flexkupplung (1) harteloxiert ist.

9. Drehwinkelgeber mit wenigstens einer Flexkupplung nach einem der Ansprüche 1 bis 8.

10. Reduziergetriebe mit wenigstens einem Drehwinkelgeber nach Anspruch 9.

## Claims

1. A flexible coupling (1) for the rotary encoder of a reduction gear, comprising at least one sleeve (2), at least one plug-in toothing (3) arranged at an axial end of the sleeve (2), at least one ring (4) surrounding the plug-in toothing (3), and at least one stiffener (5) extending inside the sleeve (2), the stiffener (5) being designed at least partially as a dome (51) and/or extending at least partially substantially axially,
**characterized in**
**that** all components of the flexible coupling (1) are additively manufactured in one piece with each other.

2. The flexible coupling (1) according to claim 1, **characterized in that** the stiffener (5) is designed at least partially as a dome (51), profile section, helix, double helix and/or multiple helix.

3. The flexible coupling (1) according to claim 2, **characterized in that** a stiffener (5) designed as a helix, double helix and/or multiple helix has a pitch angle greater than 35°.

4. The flexible coupling (1) according to any of the preceding claims, **characterized in that** the plug-in toothing (3) is coupled to the sleeve (2) solely via the stiffener (5).

5. The flexible coupling (1) according to any of claims 1 to 3, **characterized in that** the plug-in toothing (3) is coupled to the sleeve (2) solely via at least one rib (6).

6. The flexible coupling (1) according to any of claims 1 to 3, **characterized in that** the plug-in toothing (3) is coupled to the sleeve (2) via the stiffener (5) and via at least one rib (6).

7. The flexible coupling (1) according to any of claims 5 or 6, **characterized in that** the at least one rib (6) extends in the radial direction of the flexible coupling (1) and/or spirally.

8. The flexible coupling (1) according to any of the preceding claims, **characterized in that** the flexible coupling (1) comprises three axially spaced hollow cylindrical portions (11, 12, 13) each having different outer and/or inner radii, and/or that a radially outermost portion (14) of the flexible coupling (1) is designed as an axial stop for a ball bearing (15) and/or that at least one radially outer part of the flexible coupling (1) is hard anodized.

9. A rotary encoder comprising at least one flexible coupling according to any of claims 1 to 8.

10. A reduction gear comprising at least one rotary encoder according to claim 9.

## Revendications

1. Accouplement élastique (1) pour le codeur rotatif d'un réducteur, comprenant au moins un manchon (2), au moins une denture enfichable (3) disposée à une extrémité axiale du manchon (2), au moins une bague (4) entourant la denture enfichable (3) et au moins un raidisseur (5) s'étendant à l'intérieur du manchon (2), le raidisseur (5) étant réalisé au moins partiellement sous forme de dôme (51) et/ou s'étendant au moins partiellement de manière essentiellement axiale,
**caractérisé en ce que**
tous les composants de l'accouplement élastique (1) sont fabriqués de manière additive en une seule pièce les uns avec les autres.

2. Accouplement élastique (1) selon la revendication 1, **caractérisé en ce que** le raidisseur (5) est au moins partiellement formé comme un dôme (51), une section de profil, une hélice, une double hélice et/ou une hélice multiple.

3. Accouplement élastique (1) selon la revendication 2, **caractérisé en ce qu'**un raidisseur (5) formé comme une hélice, une double hélice et/ou une hélice multiple possède un angle de pas supérieur à 35°.

4. Accouplement élastique (1) selon l'une quelconque des revendications précédentes, **caractérisé en ce que** la denture enfichable (3) est couplée au manchon (2) uniquement par l'intermédiaire du raidisseur (5).

5. Accouplement élastique (1) selon l'une quelconque des revendications 1 à 3, **caractérisé en ce que** la denture enfichable (3) est couplée au manchon (2) uniquement par l'intermédiaire d'au moins une nervure (6).

6. Accouplement élastique (1) selon l'une quelconque des revendications 1 à 3, **caractérisé en ce que** la denture enfichable (3) est couplée au manchon (2) par l'intermédiaire du raidisseur (5) et au moins une nervure (6).

7. Accouplement élastique (1) selon l'une quelconque des revendications 5 ou 6, **caractérisé en ce que** la au moins une nervure (6) s'étend dans la direction radiale de l'accouplement élastique (1) et/ou en spirale.

8. Accouplement élastique (1) selon l'une quelconque des revendications précédentes, **caractérisé en ce que** l'accouplement élastique (1) comprend trois sections cylindriques creuses (11, 12, 13) espacées axialement ayant chacune des rayons extérieurs et/ou intérieurs différents, et/ou **en ce qu'**une section (14) radialement la plus extérieure de l'accouplement élastique (1) est formée comme butée axiale pour un roulement à billes (15) et/ou **en ce qu'**au moins une partie radialement extérieure de l'accouplement élastique (1) est anodisée dur.

9. Codeur rotatif comprenant au moins un accouplement élastique selon l'une quelconque des revendications 1 à 8.

10. Réducteur comprenant au moins un codeur rotatif selon la revendication 9.
